# EUROPÄISCHE PATENTANMELDUNG

(11) **EP 1 787 509 A1**
(43) Veröffentlichungstag der Anmeldung: **23.05.2007**
(21) Anmeldenummer: 06124512.2
(22) Anmeldetag: 21.11.2006
(51) Int. Cl.: A01K 5/01

(54) **Tiernahrungsbehälter**

(30) Priorität: 21.11.2005 DE 202005018111 U
(71) Anmelder: Gleissner, Christl, 92690 Pressath (DE)
(72) Erfinder: Gleissner, Christl, 92690 Pressath (DE)
(74) Vertreter: Lang, Christian

(57) **Zusammenfassung**

Die vorliegende Erfindung betrifft einen Tiernahrungsbehälter sowie ein Verfahren zu seiner Herstellung mit einer Vielzahl von übereinander angeordneten Schichten, die einzeln abziehbar ausgestaltet sind.

## Beschreibung

### Technisches Gebiet

Die vorliegende Erfindung betrifft einen Tiernahrungsbehälter.

### Stand der Technik

Tiernahrungsbehälter in verschiedensten Formen und Ausgestaltungen sind seit langem bekannt. Üblicherweise werden beispielsweise für die Fütterung von (Haus)Tieren schüssel- oder kastenartige Futtertröge verwendet, die eine Mulde aufweisen, in welcher das Tierfutter aufgenommen wird.

Nachdem das Tier das Tierfutter ganz oder teilweise gefressen hat, muss der Tiernahrungsbehälter geleert und/oder gereinigt werden, da üblicherweise geringe Mengen an Futterresten vermischt mit Tierspeichel in der Futtermulde bzw. am Tiernahrungsbehälter zurückbleiben.

Diese Säuberung des Tiernahrungsbehälters stellt eine unangenehme Tätigkeit dar und erfordert oft ein gesondertes Putzzeug, da mit den üblicherweise zur Verfügung stehenden Putz- oder Spülmitteln, wie Spüle, Spülmaschine und dergleichen, die im Haushalt zur Verfügung stehen, die Reinigung des Tiernahrungsbehälters aus hygienischen Gründen nicht durchgeführt werden soll.

### Technische Aufgabe

Es ist deshalb Aufgabe der Erfindung einen Tiernahrungsbehälter bereitzustellen, welcher die geschilderten Probleme des Standes der Technik löst und insbesondere einen Tiernahrungsbehälter bereitstellt, mit dem das lästige und aufwendige Reinigen des Tiernahrungsbehälters nach der Fütterung vereinfacht werden kann.

### Technische Lösung

Diese Aufgabe wird gelöst durch einen Tiernahrungsbehälter mit den Merkmalen des Anspruchs 1 sowie einem Verfahren zur Herstellung eines Tiernahrungsbehälters mit den Merkmalen des Anspruchs 9. Vorteilhafte Ausgestaltungen sind Gegenstand der abhängigen Ansprüche.

Die Erfindung geht aus von der Erkenntnis, dass die lästige und unangenehme Säuberung des Tiernahrungsbehälters vermieden werden kann, wenn dieser eine Vielzahl von übereinander angeordneten Schichten aufweist, die einzeln abziehbar ausgestaltet sind, so dass nach jeder Tier-Mahlzeit eine Schicht abgezogen und die entsprechende Schicht mit den Futterresten im Restmüll entsorgt werden kann.

Die Schichten können hierbei insbesondere durch Folien, insbesondere Kunststofffolien gebildet sein, wobei der Schichtstapel sieben Folienlagen für eine Wochenpackung oder 30 Lagen für eine Monatspackung umfassen kann. Selbstverständlich ist auch jede andere beliebige Anzahl von Schichten möglich.

Der Vorteil besteht hierin, dass kein unhygienisches Tiergeschirr in der Spülmaschine oder Spüle gereinigt werden muss oder extra Bürsten oder Lappen für die Reinigung vorgesehen werden müssen. Des Weiteren kann durch Vermeidung von herumstehenden dreckigen Tiernahrungsbehältern auch die Bildung von Ungeziefer vermieden werden.

Die einzelnen Schichten können in die Form des Tiernahrungsbehälters gepresst werden.

Vorteilhaft ist auch die Schichten entsprechend der Grundform des Tiernahrungsbehälters auszustanzen.

Besonders vorteilhaft ist ein Verpressen und/oder Ausstanzen der Schichten miteinander in einem Schichtstapel, wobei insbesondere das Ausstanzen nach dem Verpressen im Schichtstapel erfolgen kann.

Um eine ausreichende Haftung der einzelnen Schichten im Schichtstapel zu gewährleisten, kann zumindest in Teilbereichen der Schichten ein Form-, Kraft- und/oder Stoffschluss, insbesondere durch Reibschluss, Klebe- oder Schweißverbindungen vorgesehen werden. Diese Verbindungen sind vorteilhafterweise so ausgestaltet, dass ein einfaches Abziehen der einzelnen Schichten von Hand möglich ist. Insbesondere kann z. B. bei Klebe- oder Schweißverbindungen das Verbinden vor oder nach dem Verpressen der Schichten erfolgen.

Die Schichten können einen Greifbereich aufweisen, der das einfache Greifen der Schicht ermöglicht, so dass ein einfaches Abziehen gewährleistet wird.

Der Schichtstapel kann alleine als Tiernahrungsbehälter verwendet werden oder auf einem Träger aus wasserfester Presspappe, Plastik oder dergleichen angeordnet werden, wobei zur Verbindung mit dem Träger ähnliche Verbindungen wie Form-, Kraft- und/oder Stoffschluss gewählt werden können.

### Kurze Beschreibung der Abbildungen der Zeichnungen

Weitere Vorteile, Kennzeichen und Merkmale der vorliegenden Erfindung werden bei der nachfolgenden detaillierten Beschreibung eines Ausführungsbeispiels anhand der beigefügten Zeichnungen deutlich. Die Zeichnungen zeigen hierbei in rein schematischer Weise in

Figur 1 eine perspektivische Ansicht eines erfindungsgemäßen Tiernahrungsbehälters; und in

Figur 2 eine Querschnittsansicht durch den Tiernahrungsbehälter aus Figur 1

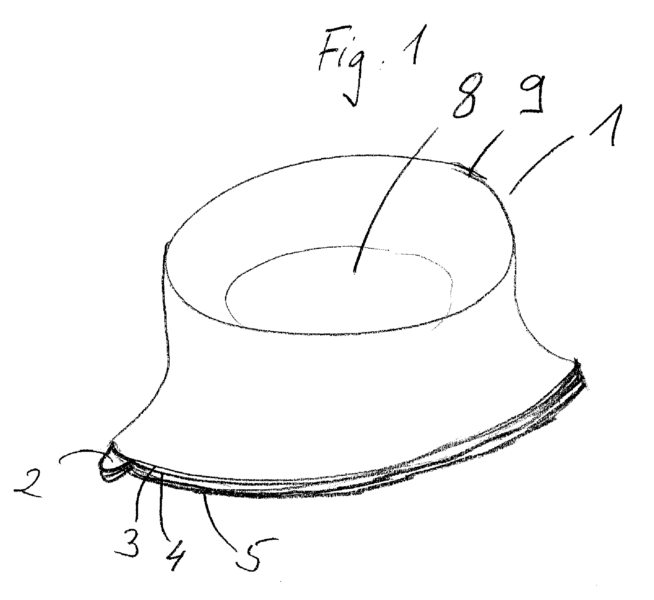

Die Figur 1 zeigt eine Ausführungsform eines erfindungsgemäßen Tiernahrungsbehälters in einer perspektivischen Ansicht, bei welcher die runde Grundrissform des Tiernahrungsbehälters 1 zu erkennen ist.

Der Tiernahrungsbehälter 1 der in der Figur 1 gezeigten Ausführungsform weist einen Träger 5 auf, auf dem ein Stapel Schichten 3, 4 vorgesehen ist, wobei lediglich zwei Schichten dargestellt sind. Allerdings können beliebig viele Schichten, vorzugsweise sieben für eine Wochenpackung oder 30 Lagen für eine Monatspackung vorgesehen werden.

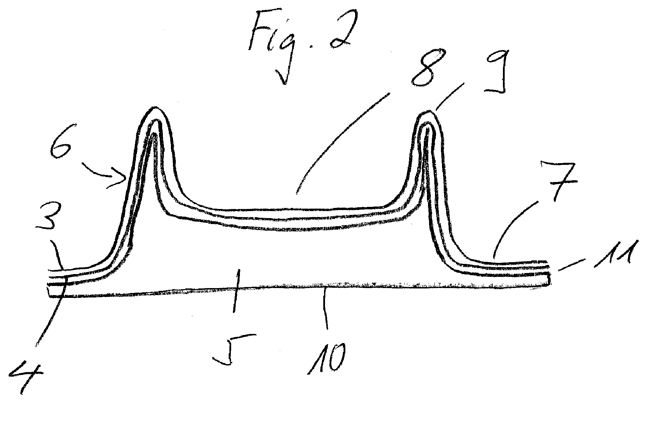

Wie sich insbesondere aus der Querschnittsansicht der Figur 2 ergibt, sind die Schichten entsprechend der Hunde- bzw. Katzenfuttertrogform des Tiernahrungsbehälters 1 mit einer Mulde 8 versehen, welche der Aufnahme des Tierfutters dient. Die Mulde 8 ist von einem umlaufenden Rand 9 umgeben, welcher bogenförmig nach Außen in Richtung des Bodens 10 ausläuft und somit einen flanschartigen Umgebungsbereich 7 bildet. Die gezeigte Grundform des Tiernahrungsbehälters 1 ist für den Erfindungsgedanken nicht beschränkend, sondern dient lediglich der Veranschaulichung eines bevorzugten Ausführungsbeispiels. Statt der gezeigten runden Hundefuttertrogform können auch eckige, ovale, rechteckige oder sonstige Formen, wie Quaderformen, Schüsselformen oder dergleichen, vorgesehen werden.

Bei dem gezeigten Ausführungsbeispiel bedecken die Schichten 3 und 4 des Schichtstapels die gesamte Oberfläche des Tiernahrungsbehälters 1, d. h. von der Futtermulde 8 über den Rand 9 bis zum umlaufenden Flanschbereich 7. Allerdings besteht auch die Möglichkeit, den Schichtstapel lediglich im Bereich der Futtermulde 8 bis zum oberen Ende des Randes 9 vorzusehen.

Bei dem gezeigten Ausführungsbeispiel der Figuren 1 und 2 ist ferner unterhalb des Schichtstapels ein Träger 5 vorgesehen, auf dem der Schichtstapel 3, 4 angeordnet ist. Alternativ kann auch auf den Träger 5 verzichtet werden, so dass lediglich der Schichtstapel 3, 4 als Tiernahrungsbehälter 1 dient. Dies ist insbesondere dann möglich, wenn die einzelnen Schichten 3, 4 eine ausreichende Stabilität aufweisen. Diese Stabilität kann bei dünnen Schichten auch durch die entsprechende Formgebung und Materialauswahl erzielt werden.

Bei dem Ausführungsbeispiel der Figuren 1 und 2 sind die Schichten 3 und 4 des Schichtstapels über Reibschluss im Bereich der ansteigenden Flanke 6 des Randes 9 miteinander verbunden, so dass keine zusätzliche Verbindung der einzelnen Schichten 3 und 4 erforderlich ist.

Alternativ könnte im Bereich des umlaufenden Flanschbereichs 7 eine Klebe- oder Schweißverbindung vorgesehen werden.

Weiterhin wäre eine Formschlussverbindung der Schichten 3 und 4 untereinander und mit dem Träger 5 beispielsweise durch Umbördeln im äußeren Randbereich 11 denkbar.

In der Figur 1 ist zudem zu erkennen, dass an den einzelnen Schichten 3 und 4 des Schichtstapels jeweils eine Lasche 2 vorgesehen ist, die zum Ergreifen der einzelnen Schichten 3, 4 und zum einfachen Abziehen der Schichten dient.

Die Herstellung des erfindungsgemäßen Tiernahrungsbehälters 1 erfolgt nun in der Weise, dass mehrere Folien 3 und 4 übereinander gelegt werden, wobei optional in bestimmten Teilbereichen eine Klebe- oder Schweißverbindung vorgesehen werden kann. Dieser Schichtstapel wird dann durch eine Presse mit einem Presswerkzeug in Form des herzustellenden Tiernahrungsbehälters gepresst und entsprechend der Grundform mit dem äußeren Rand 11 ausgestanzt.

Dieses Schichtpaket kann dann selbst als Tiernahrungsbehälter Verwendung finden oder auf einem Träger 5 angeordnet werden.

Die Benutzung erfolgt in der Weise, dass das Tierfutter in die Futtermulde 8 eingefüllt wird und die oberste Schicht 3 nach Beendigung des Fressvorgangs zusammen mit evtl. Resten in der Futtermulde 8 abgezogen und im Restmüll entsorgt wird. Vorzugsweise ist die Dicke der Schichten 3, 4 so bemessen, dass die abgezogene Schicht 3 platzsparend im Restmüll zusammengefaltet werden kann.

Damit wird eine Reinigung und Säuberung des Tiernahrungsbehälters entbehrlich.

Obwohl die vorliegende Erfindung anhand eines bevorzugten Ausführungsbeispiels gemäß der beigefügten Zeichnungen detailliert beschrieben worden ist, ist für den Fachmann ersichtlich, dass Änderungen oder Abweichungen insbesondere in der Form, dass einzelne Merkmale der Erfindung unterschiedlich kombiniert oder weggelassen werden, möglich sind, ohne dass der Schutzbereich der beigefügten Ansprüche verlassen wird.

## Patentansprüche

1. Tiernahrungsbehälter,
**dadurch gekennzeichnet, dass**
er eine Vielzahl von übereinander angeordneten Schichten (3, 4) aufweist, die einzeln abziehbar ausgestaltet sind.

2. Tiernahrungsbehälter nach Anspruch 1,
**dadurch gekennzeichnet, dass**
die Schichten (3, 4) durch Folien, insbesondere Kunststofffolien gebildet sind.

3. Tiernahrungsbehälter nach Anspruch 1 oder 2,
**dadurch gekennzeichnet, dass**
die Schichten (3, 4) gepresst und/oder gestanzt sind.

4. Tiernahrungsbehälter nach einem der vorhergehenden Ansprüche,
**dadurch gekennzeichnet, dass**
die Schichten (3, 4) miteinander in Form gepresst und ausgestanzt sind.

5. Tiernahrungsbehälter nach einem der vorhergehenden Ansprüche,
**dadurch gekennzeichnet, dass**
die Schichten (3, 4) wenigstens in Teilbereichen über Form-, Kraft- und/oder Stoffschluss, insbesondere durch Reibschluss, Klebe- oder Schweißverbindungen miteinander verbunden sind.

6. Tiernahrungsbehälter nach einem der vorhergehenden Ansprüche,
**dadurch gekennzeichnet, dass**
die Schichten (3, 4), insbesondere jede Schicht einen Greifbereich (2), vorzugsweise in Form einer Lasche aufweist.

7. Tiernahrungsbehälter nach einem der vorhergehenden Ansprüche,
**dadurch gekennzeichnet, dass**
er eine Hunde- oder Katzenfuttertrogform mit rundem, ovalem, eckigen oder ähnlichem Grundriss aufweist.

8. Tiernahrungsbehälter nach einem der vorhergehenden Ansprüche,
**dadurch gekennzeichnet, dass**
ein Träger (5) aus wasserfester Presspappe, Plastik oder dergleichen vorgesehen ist.

9. Verfahren zur Herstellung eines Tiernahrungsbehälters, insbesondere nach einem der Ansprüche 1 bis 8,
**dadurch gekennzeichnet, dass**
ein Stapel übereinander angeordneter Schichten (3, 4) gebildet wird, welche miteinander in die Form eines Tiernahrungsbehälters, insbesondere in Trogform gepresst werden.

10. Verfahren nach Anspruch 9,
**dadurch gekennzeichnet, dass**
die Schichten vor oder nach dem Verpressen zumindest teilweise miteinander verbunden und/oder der Tiernahrungsbehälter nach dem Verpressen aus dem Schichtstapel ausgestanzt wird.
